# EUROPÄISCHE PATENTSCHRIFT

(11) **EP 3 507 157 B1**
(45) Veröffentlichungstag und Bekanntmachung des Hinweises auf die Patenterteilung: **06.07.2022**
(21) Anmeldenummer: 17755456.5
(22) Anmeldetag: 11.08.2017
(51) Int. Cl.: B60W 50/16

(54) **VERFAHREN, VORRICHTUNG UND COMPUTERPROGRAMM ZUR ERZEUGUNG UND ÜBERMITTLUNG EINER FAHRERINFORMATION**
METHOD, APPARATUS AND COMPUTER PROGRAM FOR PRODUCING AND TRANSMITTING A PIECE OF DRIVER INFORMATION
PROCÉDÉ, DISPOSITIF ET PROGRAMME INFORMATIQUE SERVANT À PRODUIRE ET TRANSMETTRE UNE INFORMATION DESTINÉE AU CONDUCTEUR

(30) Priorität: 01.09.2016 DE 102016216590
(43) Veröffentlichungstag der Anmeldung: 10.07.2019
(73) Patentinhaber: Bayerische Motoren Werke Aktiengesellschaft, 80809 München (DE)
(72) Erfinder: AUGST, Alexander, 80937 Muenchen (DE)
(86) Internationale Anmeldenummer: PCT/EP2017/070471
(87) Internationale Veröffentlichungsnummer: WO 2018/041607

(56) Entgegenhaltungen:
- EP-A1- 2 716 501
- WO-A1-2015/092163
- DE-A1-102011 084 903
- DE-A1-102012 005 882
- DE-A1-102012 210 300
- US-A1- 2012 126 965
- US-A1- 2015 197 283

## Beschreibung

Die Erfindung betrifft ein Verfahren, eine Vorrichtung und ein korrespondierendes Computerprogrammprodukt zur Erzeugung und Übermittlung einer Fahrerinformation in einem Fahrzeug, wobei zumindest ein Teil der Fahrerinformation in Form einer haptischen Fahrerinformation an einem Steuermittel eines Fahrzeugs, insbesondere an einem manuellen Steuermittel, erzeugt bzw. übermittelt wird. Zum Stand der Technik wird insbesondere auf die Wo 2015/092163 A1 und die US 2015/0197283 A1 verwiesen.

Ein Kraftfahrzeug weist heute meist eine Vielzahl von Fahrerassistenzsystemen auf, die den Fahrer des Fahrzeugs bei der Führung des Fahrzeugs unterstützen. Einige an sich bekannte Fahrerassistenzsysteme nutzen dabei das Lenkrad des Fahrzeugs, um eine Warnung an den Fahrer beispielsweise über ein Vibrieren des Lenkrads zu übermitteln. Dabei können haptisch wahrnehmbare Maßnahmen am Lenkrad durchgeführt werden, z.B. kann ein Hinweis darauf, dass eine aktuelle Fahrspur verlassen wird, mittels einer Vibration übermittelt werden.

Einhergehend mit der Zunahme der Bedeutung von Fahrerassistenzsystemen und diverser, teils sicherheitsrelevanter automatisierter Eingriffe in die Führung eines Fahrzeugs steigen auch die Anforderungen an eine sichere sowie leicht und eindeutig interpretierbare Signalisierung an den Fahrer des Fahrzeugs. Diesbezüglich eine Verbesserung gegenüber dem Stand der Technik aufzuzeigen ist Aufgabe der vorliegenden Erfindung.

Diese Aufgabe wird durch die unabhängigen Ansprüche gelöst. Vorteilhafte Ausführungsformen sind in den abhängigen Ansprüchen angegeben.

Gemäß der Erfindung wird ein Verfahren zur Erzeugung einer Fahrerinformation in einem Fahrzeug beschrieben, wobei zumindest ein Teil der Fahrerinformation als eine haptische Fahrerinformation an einem Steuermittel des Fahrzeugs erzeugt wird, umfassend: Ermitteln eines Maßes für einen haptischen Kontakt zwischen dem Fahrer des Fahrzeugs und dem Steuermittel zur Steuerung des Fahrzeugs; und Erzeugen der Fahrerinformation in Abhängigkeit von dem ermittelten Maß des haptischen Kontakts zwischen dem Fahrer und dem besagten Steuermittel als haptische Fahrerinformation und/oder Erzeugen einer der Fahrerinformation entsprechenden und vom Fahrer über einen anderen Wahrnehmungskanal wahrnehmbaren Hilfs-Fahrerinformation abhängig von dem ermittelten Maß des haptischen Kontakts.

Das Erzeugen der Fahrerinformation kann bevorzugt derart an dem besagten Steuermittel des Fahrzeugs erfolgen, dass die haptische Fahrerinformation an dem Steuermittel haptisch durch die Hand des Fahrers wahrnehmbar ist. Die Erzeugung der entsprechenden physikalischen Einflüsse, z.B. Vibrationen für die haptische Fahrerinformation, die ebenfalls in der Erfindung adressiert sind, können mittels der Ansteuerung eines oder mehrerer (verschiedenen) Aktoren innerhalb und/oder außerhalb des Steuermittels erzeugt werden. Dabei kann die Fahrerinformation abhängig von dem ermittelten Maß des haptischen Kontakts mittels Ansteuerung unterschiedlicher Aktoren innerhalb und/oder außerhalb des Steuermittels erzeugt werden.

In anderen Worten und vereinfacht ausgedrückt kann ermittelt werden, wie ein Maß (oder mehrere unterschiedliche) Maße eines haptischen Kontakts zwischen dem Fahrer und dem besagten Steuermittel (bspw. dem Lenkrad) zu einem relevanten Zeitintervall ist. Daraufhin kann eine Fahrerinformation derart erzeugt, insbesondere angepasst werden, dass diese sicher und rechtzeitig von dem Fahrer wahrgenommen und interpretiert wird. Dabei kann im Verfahren sowohl eine Erzeugung, insbesondere Anpassung der besagten haptischen Fahrerinformation als auch eine Erzeugung, insbesondere Anpassung einer anderen Fahrerinformation, insbesondere eine Erzeugung, insbesondere Anpassung einer der Fahrerinformation entsprechender Hilfs-Fahrerinformation, abhängig von einem oder mehreren ermittelten Maßen des haptischen Kontakts erfolgen.

Bei der Fahrerinformation, insbesondere bei der eigentlichen Botschaft der Fahrerinformation, kann es sich dabei um eine Information aus einem Fahrerassistenzsystem, Navigationssystem, Umfeld-Erfassung, etc. handeln. Es kann sich auch um eine Fahrerinformation handeln, die mit dem Steuern des Fahrzeugs, mit dem Steuerungsmittel des Fahrzeugs zusammenhängen oder nicht zusammenhängen.

Die haptische Fahrerinformation kann dabei an einem manuellen Steuermittel, insbesondere an einem Lenkrad, erzeugt werden, mit dem der Fahrer das Fahrzeug mittels einer physischen Einwirkung bzw. Berührung steuert. Insbesondere handelt es sich beim Steuermittel um ein manuelles Steuermittel zur Steuerung der Querführung des Fahrzeugs (bspw. in Form einer Vorderrad- und/oder Hinterradlenkung), wobei das Steuermittel bspw. als Lenkrad (oder Lenkhörner) eines PKW's oder als Lenker eines Zweirads, z.B. Motorrads ausgebildet sein kann.

Die haptische Fahrerinformation kann eine Vibration und/oder eine kurzzeitige (variable) Krafteinwirkung, insbesondere ein Drehmoment oder eine Schwingung des Steuermittels in Drehrichtung um dessen Achse ("Dreh-Schwingung") an dem manuellen Steuermittel sein bzw. darstellen. Neben einem manuellen Steuermittel ist die vorliegende Erfindung jedoch auch an einem mit den Füßen des Fahrers bedienbaren Steuermittel des Fahrzeugs, insbesondere einem Pedal, umsetzbar; d.h. das besagte Steuermittel kann also auch ein Fahrpedal und/oder Bremspedal des Fahrzeugs sein.

Ferner sei darauf hingewiesen, dass der Begriff "Haptik" allgemein zu verstehen ist und somit auch die taktile Wahrnehmung (durch den Fahrer des Fahrzeugs) allgemein umfasst, solange die Signalübertragung an einem Steuerelement des Fahrzeugs, wie dem Lenkrad oder einer allgemeinen Lenkhandhabe oder einem Pedal, zum Fahrer hin durch eine geeignete Reizerzeugung beim Fahrer erfolgt. Alternativ oder zusätzlich kann unter dem Begriff "Haptik" bzw. haptische Fahrerinformation auch eine (entsprechend leichte) mittels elektrischer Stromstimulation an die Haut des Fahrers übermittelte Fahrerinformation verstanden werden. Dabei können eine oder mehrere unterschiedliche Arten der Fahrerinformation mittels einer schwachen, variablen und der menschlichen Wahrnehmung angepassten Stromstimulation, z.B. als Impulse bzw. Spannungsmuster erzeugt werden. Beispielsweise kann es sich um eine Stimulation mit elektrischem Strom handeln, die eine leichte Muskelkontraktion verursacht. Dabei kann beim Berühren bzw. Umgreifen des Steuermittels eine nahezu haptische Wahrnehmung verursacht oder simuliert werden.

Das Maß des haptischen Kontakts zwischen dem Fahrer des Fahrzeugs und einem Steuermittel kann bevorzugt eine der folgenden Größen repräsentieren: Ein Maß der Kontaktfläche, insbesondere zwischen der Hand (Handfläche) des Fahrers mit dem Lenkrad des Fahrzeugs, und/oder einen Druck, insbesondere als die gesamte Andruckkraft und/oder Druckverteilung und/oder als Druck pro Kontaktfläche und/oder - Bereiche der Handfläche, die (im relevanten Zeitintervall) einen haptischen Kontakt mit dem Steuermittel des Fahrzeugs zum relevanten Zeitintervall haben oder voraussichtlich haben werden, und/oder Bereiche des Steuermittels des Fahrzeugs die (im relevanten Zeitintervall) einen haptischen Kontakt mit dem Fahrer haben oder voraussichtlich haben werden. Besonders bevorzugt werden im Verfahren zwei oder mehrere unterschiedliche Maße des haptischen Kontakts berücksichtigt.

Die genannte Fahrerinformation, bzw. zumindest der Anteil der Fahrerinformation, der über den haptischen Kontakt zwischen dem Fahrer und dem Steuermittel übermittelt wird, kann insbesondere dazu erzeugt werden, um einen Fahrer des Fahrzeugs zu warnen oder eine Anweisung zu empfohlenen und/oder nicht empfohlenen Handlungen zu geben. Beispielsweise kann die haptische Fahrerinformation im Zusammenhang mit dem Spurverlauf der vom Fahrzeug aktuell oder in der nahen Zukunft befahrenen Fahrbahn und/oder mit der Spurführung und/oder Spurwechsel des Fahrzeugs erzeugt werden. Auch kann es sich um eine Fahrerinformation im Zusammenhang mit einem seitlichen Abstand des Fahrzeugs zu einem Hindernis bzw. Verkehrsteilnehmer oder im Zusammenhang mit einer Kollisionsgefahr mit einem Hindernis, z.B. von einer bestimmten Seite handeln, falls die Kollisionsgefahr ansteigt bzw. ein vorausbestimmtes Maß übersteigt. Ferner kann es sich bei der Fahrerinformation um eine Information handeln, die mit der Führung des Fahrzeugs und/oder einer Fahrzeugbedienung und/oder Navigation des Fahrzeugs zusammenhängt.

Zur Erfindung gehört auch die Beobachtung, dass ein Maß des haptischen Kontakts durch Parameter eines Druckmusters und/oder über ein Maß eines kapazitiven und/oder induktiven Wertes zwischen dem Steuerelement und dem Fahrer (bspw. einer oder zwei Handflächen des Fahrers) beschrieben bzw. repräsentiert werden kann. Dabei kann das Maß des kapazitiven Kontakts und/oder induktiven Kontakts beispielsweise mittels eines im Lenkrad des Fahrzeugs integrierten kapazitiven Sensors und/oder eines Lenkradbeheizungsdrahts erfasst werden. Alternativ oder zusätzlich kann der (physikalische) Druck oder die Druckverteilung der Hand (bzw. der Handflächen) des Fahrers auf das manuelle Steuerelement erfasst werden. Faktisch kann das Erzeugen der Fahrerinformation dann auch abhängig von einem oder mehreren Druckwerten und/oder Kapazitätswerten oder einer Änderung der Druckwerte und/oder Kapazitätswerte, die am Lenkrad des Fahrzeugs durch eine oder zwei Hände des Fahrers verursacht werden, erfolgen.

Das Erzeugen der haptischen Fahrerinformation umfasst im Verfahren auch das Anpassen dieser haptischen Fahrerinformation. Dabei kann es sich um ein Anpassen eines oder mehrerer Parameter der haptischen Fahrerinformation noch vor dem Ausgeben der Fahrerinformation und/oder ein Anpassen eines oder mehrerer Parameter der haptischen Information während des Ausgebens dieser Information handeln.

Ferner kann das Verfahren auch eine negative Entscheidung bezüglich des Erzeugens einer Fahrerinformation oder des haptischen Teils der Fahrerinformation umfassen. Beispielsweise kann abhängig von dem Maß des haptischen Kontakts zwischen dem Fahrer und dem Steuermittel über ein Nicht-Erzeugen einer haptischen Fahrerinformation am Steuermittel des Fahrzeugs entschieden werden, beispielsweise falls dieses keinen oder keinen hinreichenden haptischen Kontakt mit dem Fahrer des Fahrzeugs hat. Daraufhin kann bspw. eine weitere zweckmäßig passende, insbesondere nicht-haptische Hilfs-Fahrerinformation erzeugt, insbesondere angepasst werden.

Gemäß einer vorteilhaften Weiterbildung des Verfahrens kann die Amplitude und/oder Frequenz und/oder die Dauer der erzeugten haptischen Fahrerinformation in Abhängigkeit von dem ermittelten Maß des haptischen Kontakts zwischen dem Fahrer des Fahrzeugs und einem Steuermittel, insbesondere dem Steuermittel zur Steuerung des Fahrzeugs angepasst werden. Beispielsweise kann bei einem geringeren Kontakt eine höhere Amplitude und/oder Dauer des erzeugten haptischen Signals gewählt werden. Ferner kann die Frequenz der haptischen Fahrerinformation variiert werden, insbesondere derart, dass Frequenzen gewählt werden, die für eine gewünschte Reizübertragung bei dem ermittelten Maß des haptischen Kontakts (z.B. bei einer hohen, mittleren, niedriger Andruckfläche und/oder Andruckkraft) besonders geeignet sind. Dabei kann auch berücksichtigt werden, dass bei bestimmten Maßen oder Ausmaßen des haptischen Kontakts, z.B. bei einem relativ großflächigen aber einem druckschwachen haptischen Kontakt, bestimmte Vibrationsfrequenzen als sehr unangenehm oder als Überreizen empfunden werden können.

Gemäß der Erfindung wird ein Vibrationsparameter im Fahrzeug als Maß von im Fahrzeug aktuell oder in der nahen Zukunft herrschenden Vibrationen ermittelt und es wird abhängig hiervon die Amplitude und/oder Frequenz der haptischen Fahrerinformation angepasst, und/oder ein Zeitintervall oder ein Startzeitpunkt zur Ausgabe der haptischen Fahrerinformation angepasst, und/oder die Erzeugung, insbesondere Übermittlung, zumindest ein Teils der haptischen Fahrerinformation auf andere Teile des Fahrzeugs verlagert. Dabei kann auch eine zumindest teilweise Verlagerung, insbesondere eine Aufteilung der Erzeugung zumindest einen Teils der Fahrerinformation abhängig von dem ermittelten Vibrationsparameter im Fahrzeug und/oder abhängig von dem ermittelten Maß des haptischen Kontakts zwischen dem Fahrer des Fahrzeugs und dem Steuermittel des Fahrzeugs erfolgen. Dabei kann auch ein mathematisches Verhältnis zwischen einer haptisch übermittelten Fahrerinformation und nicht-haptisch übermittelten Fahrerinformation, z.B. in kleinen Stufen, angepasst werden.

Auch können unterschiedliche Aspekte der Erzeugung der Fahrerinformation angepasst werden, insbesondere kann abhängig von dem ermittelten Maß des haptischen Kontakts und/oder dem Vibrationsparameter im Fahrzeug durch eine elektronische Steuereinheit entschieden werden, die Fahrerinformation an unterschiedlichen Teilen des Fahrzeugs und/oder mit unterschiedlichen Mitteln, insbesondere Aktoren, zu erzeugen. Beispielsweise kann der Anteil einer haptischen Fahrerinformation, der innerhalb des Lenkrads des Fahrzeugs erzeugt wird und des Anteils der haptischen Fahrerinformation, die z.B. durch eine Ansteuerung einer Servolenkung des Fahrzeugs erzeugt wird, geeignet angepasst werden.

Bevorzugt kann die Hilfs-Fahrerinformation, insbesondere eine haptische Hilfs-Fahrerinformation an einem anderen Teil des Fahrzeugs erzeugt werden, mit dem der Fahrer einen haptischen Kontakt, insbesondere mit einem hinreichenden Maß des haptischen Kontakts, im relevanten Zeitintervall hat.

Erfindungsgemäß kann ein zumindest teilweises Verlagern der Erzeugung bzw. Übermittelns der haptischen Fahrerinformation auf ein anderes Steuermittel des Fahrzeugs erfolgen. Beispielsweise wenn ermittelt wird, dass der Fahrer das Lenkrad des Fahrzeugs nicht hinreichend mit seiner Hand bzw. Händen umgreift, kann eine Erzeugung der haptischen Fahrerinformation bzw. der Hilfs-Fahrerinformation an zumindest einem anderen Steuermittel, beispielsweise an einem Pedal des Fahrzeugs erfolgen. So kann eine haptische Fahrerinformation an demjenigen Pedal des Fahrzeugs erzeugt werden, mit dem der Fahrer aktuell einen hinreichenden haptischen Kontakt hat.

Bei dem genannten Vibrationsparameter im Fahrzeug kann es sich beispielsweise um eine am besagten Steuermittel zur Steuerung es Fahrzeugs auftretende Vibration handeln. Eine solche Vibration kann z.B. mittels eines Sensors, der am oder in der Nähe des Steuermittels verbaut ist, ermittelt werden. Beispielsweise kann der Vibrationsparameter im Fahrzeug auch mit einem in dem Steuermittel bereits vorhandenen Sensor erfasst werden.

Ferner kann der Vibrationsparameter im Fahrzeug auch eine weitere, nicht oder nicht direkt über das besagte Steuermittel wahrnehmbare Vibrationsinformation sein. Ein solcher Vibrationsparameter im Fahrzeug kann z.B. über weitere Fahrzeugteile, mit welchen der Fahrer einen Kontakt hat, für den Fahrer spürbar sein. Es können aber auch Vibrationsparameter im Fahrzeug berücksichtigt werden, die über weitere (nicht in den Händen befindlichen) Nerven des Fahrers oder über einen oder mehrere andere Wahrnehmungskanäle des Fahrers wahrgenommen werden.

Der Vibrationsparameter im Fahrzeug kann auch mit einem oder mehreren Mikrofonen im Fahrzeug ermittelt werden. Dabei können z.B. bereits im Fahrzeug vorgesehene Mikrofone, die einer mobilen Kommunikation (Freisprecheinrichtung) oder einer Sprachbedienung dienen, genutzt werden. Auch kann eine Betriebsart und/oder Leistung der Musik aus einer Infotainment-Anlage des Fahrzeugs, insbesondere ein Anteil an niedrigen Frequenzen (Bässe) ermittelt und als ein Vibrationsparameter im Fahrzeug berücksichtigt werden.

Typischerweise ist ein Teil der tatsächlich auftretender Vibrationsparameter im Fahrzeug bzw. das Maß von Vibrationen im Fahrzeug auch stark von der Beschaffenheit, insbesondere Unebenheiten einer vom Fahrzeug (im relevanten Zeitintervall, aktuell und/oder zukünftig) befahrenen Fahrbahn abhängig.

Eine solche Vibrationsinformation kann erfindungsgemäß ermittelt werden, basierend auf Informationen über die Beschaffenheit (vereinfacht: Qualität) der (aktuell oder zukünftig befahrenen) Fahrbahn. Die Beschaffenheit der Fahrbahn kann aus einer digitalen Navigationskarte und/oder Sensordaten eines Umfeldsensors des Fahrzeugs, der eingerichtet ist, eine von dem Fahrzeug (aktuell oder zukünftig) befahrenen Fahrbahn zu erfassen ermittelt werden; ferner aus Sensordaten eines vertikaldynamischen Sensors des Fahrzeugs und/oder Sensordaten eines Inertialsensors und/oder Beschleunigungssensors des Fahrzeugs und/oder Sensordaten eines Bewegungs- und/oder Kraftsensors an einem bspw. manuellen Steuermittel des Fahrzeugs. Dabei ergibt sich ggf. ein weiterer Vorteil, dass das Erzeugen der Fahrerinformation vorab, z.B. einige Sekunden oder Sekundenbruchteile vorab geplant werden kann. Besonders bevorzugt kann die Beschaffenheit der Fahrbahn in Form eines relevanten Abschnitts eines sogenannten Fahrbahnprofils berücksichtigt werden.

Beim Ermitteln dieser Art des Vibrationsparameters im Fahrzeug kann auch ein Maß der Dämpfung bzw. der Weitergabe der an den Rädern des Fahrzeugs entstehenden Vibrationen durch das Fahrwerk des Fahrzeugs, insbesondere durch einen Lenkstrang des Fahrzeugs, geeignet berücksichtigt werden. Beispielsweise kann auch eine (zum relevanten Zeitintervall gültige) Einstellung des Fahrwerks des Fahrzeugs, z.B. Sport, Normal, Komfort, Offroad, etc. berücksichtigt werden.

In einer vorteilhaften Weiterbildung umfasst das Verfahren das Erzeugen einer haptischen Fahrerinformation an dem Steuermittel des Fahrzeugs abhängig von dem ermittelten Maß des haptischen Kontakts und/oder von dem ermittelten Vibrationsparameter im Fahrzeug, wobei die Fahrerinformation entweder zeitlich vorgezogen wird, oder zeitlich aufgeschoben wird, und/oder an ein bestimmtes Zeitintervall angepasst wird. Besonders bevorzugt kann das Erzeugen der haptischen Fahrerinformation an ein bestimmtes Zeitintervall angepasst werden, wobei das Zeitintervall, insbesondere der Anfangszeitpunkt und der Endzeitpunkt abhängig von der Verkehrssituation und/oder von einer sensorischem Umfelderfassung gewählt wird.

In einer vorteilhaften Weiterbildung kann im Verfahren ein Muster, insbesondere ein Amplitudenmuster und/oder Frequenzmuster der haptischen Fahrerinformation abhängig von dem ermittelten eines Maßes für einen haptischen Kontakt zwischen dem Fahrer und dem Steuermittel zur Steuerung des Fahrzeugsund/oder von dem ermittelten Vibrationsparameter im Fahrzeug gewählt und/oder angepasst werden. Hierbei kann es sich um bestimmte Muster, insbesondere vorausbestimmte Muster handeln. Bevorzugt wird aus einer Anzahl vorgefertigter Muster ein passendes Muster ausgewählt und eine entsprechende haptische Fahrerinformation erzeugt.

In einer vorteilhaften Weiterbildung des Verfahrens erfolgt abhängig von dem oder einem Maß für einen haptischen Kontakt zwischen dem Fahrer und dem Steuermittel und/oder abhängig von dem ermittelten Vibrationsparameter im Fahrzeug eine zumindest teilweise Verlagerung der Fahrerinformation auf zumindest einen anderen Wahrnehmungskanal des Fahrers, was vorliegend als Hilfs-Fahrerinformation bezeichnet wird. Dabei soll die Hilfs-Fahrerinformation einen sinngemäß zur ursprünglichen Fahrerinformation passenden Inhalt bzw. eine mit dieser im wesentlichen übereinstimmende Botschaft umfassen. So kann die Hilfs-Fahrerinformation eine Handlungsempfehlung, eine Orientierungsinformation oder einen Hinweis auf eine bestimmte Richtung umfassen, welche auch eine ursprünglich geplante Fahrerinformation gehabt hat oder gehabt hätte.

Bei der Hilfs-Fahrerinformation kann es sich um eine Fahrerinformation handeln, die demselben Zweck wie die haptische Fahrerinformation am Steuermittel des Fahrzeugs dient. Beispielsweise umfasst eine zumindest teilweise Verlagerung der Fahrerinformation, dass eine Fahrerinformation mit derselben oder einer ähnlichen Bedeutung oder Fahrerinformation, die demselben Zweck dient, anstelle oder zusätzlich zur haptischen Fahrerinformation mittels einer optischen Anzeige und/oder mittels einer akustischen Information ausgegeben wird.

Das erfindungsgemäße Verfahren kann folgende Schritte umfassen: Eine Ermittlung abhängig von dem ermittelten Maß des haptischen Kontakts, ob eine vordefinierte (z.B. eine zumindest hinreichende und/oder unter einem vorausbestimmten Wert liegende) Reizübertragung und/oder ein rechtzeitiger Empfang der haptischen Fahrerinformation beim Fahrer gewährleistet sein kann, und eine Variation der haptischen Fahrerinformation derart, dass eine vordefinierte Reizübertragung und/oder ein rechtzeitiger Empfang der haptischen Fahrerinformation mit einer hinreichenden (hohen) Wahrscheinlichkeit gewährleistet wird, und/oder das Verlagern zumindest eines Teils der Fahrerinformation, falls keine hinreichende Reizübertragung und/oder kein rechtzeitiger Empfang der Fahrerinformation wahrscheinlich ist.

Dabei können für verschiedene Fahrerinformationen bzw. Inhalte der Fahrerinformation unterschiedliche Wahrscheinlichkeitsschwellen definiert werden, mit welchen diese vom Fahrer jeweils rechtzeitig empfangen (wahrgenommen) werden können.

Das Verfahren umfasst weiter das Erzeugen einer Hilfs-Fahrerinformation, die nicht an einem manuellen Steuermittel erzeugt wird. Dabei kann der Inhalt der Fahrerinformation abhängig von dem Maß des haptischen Kontakts mit dem Steuermittel angepasst werden. Insbesondere kann das Verfahren eine Erzeugung der Fahrerinformation umfassen, die in einen haptischen Anteil und einen nicht-haptischen Anteil aufgeteilt wird. Dabei kann die Aufteilung der Fahrerinformation abhängig von dem ermittelten Maß des haptischen Kontakts, insbesondere in Echtzeit, angepasst werden.

Das Erzeugen der Fahrerinformation, kann derart angepasst werden, dass die entsprechende Kommunikationsbotschaft (vom Fahrzeug zum Fahrer) auch bei einem mangelnden haptischen Kontakt und/oder bei starken Vibrationen im Fahrzeug (insbesondere bei starken anderweitigen Vibrationen am manuellen Steuermittel) zuverlässig übermittelt werden kann. Auch können im Verfahren zwei oder mehrere Fahrerinformationen mit unterschiedlichen Bedeutungen erzeugt werden, wobei Parameter, mit welchen diese erzeugt werden, derart angepasst werden, dass die zwei oder mehrere Fahrerinformationen besser bzw. trotz Störeinflüsse oder eines veränderlichen haptischen Kontakts voneinander unterscheidbar sein werden.

Ferner (ggf. zugleich) kann durch die Anpassung der Fahrerinformation, insbesondere der haptischen Fahrerinformation eine nachteilige Störung des Fahrers bzw. eines anderen Insassen aufgrund der haptischen Fahrerinformation effektiv vermieden werden. Bevorzugt werden dabei Vibrationen im Fahrzeug in einen Frequenzbereich von 0,1 - 1000 Hz, insbesondere von 0,5 - 300 Hz, geeignet berücksichtigt. Dabei handelt es sich um die für Kraftfahrzeuge wie Personenkraftwagen typischen Vibrationen, die einen erheblichen Einfluss auf einen menschlichen Wahrnehmungskanal bei der Wahrnehmung haptischer Reize aufweisen können.

Insbesondere kann es sich bei der haptischen Fahrerinformation um eine zeitlich variable gerichtete Krafteinwirkung, insbesondere um ein gerichtetes, zeitlich variables (haptisch wahrnehmbares) Drehmoment oder eine Schwingung des Steuermittels in Drehrichtung um die eigene Achse ("Dreh-Schwingung") handeln, das am besagten Steuermittel, insbesondere Lenkrad des Fahrzeugs übermittelt wird, Dabei kann das Drehmoment zu einer haptischen Fahrerinformation entsprechend einer vorausbestimmten zeitlichen Funktion, insbesondere asymmetrisch für die Lenkrichtungen links und rechts, erzeugt werden. Die haptische Fahrerinformation kann dabei auch eine oder mehrere im Wesentlichen konstante oder langsam veränderliche Krafteinwirkung(en) bzw. ein konstantes oder langsam veränderliches Drehmoment umfassen oder mit einem solchen kombiniert werden. Dabei kann auch die Richtung und/oder Frequenz und/oder Amplitude der Krafteinwirkung eine oder mehrere bestimmte Informationen für den Fahrer des Fahrzeugs, insbesondere über seinen haptischen Wahrnehmungskanal, übermitteln. Bei mehreren Fahrerinformationen kann es sich um unterscheidbare Fahrerinformationen handeln. Dabei können zwei oder mehrere unterschiedliche Fahrerinformationen durch Richtung und/oder Frequenz und/oder Amplitude und/oder bestimmte (vom Fahrer unterscheidbare) Muster der Krafteinwirkung kodiert werden.

Bevorzugt kann die haptische Fahrerinformation als eine Lenkradvibration und/oder ein gerichtetes Drehmoment des Lenkrads des Fahrzeugs erzeugt werden. Eine solche haptische Fahrerinformation kann beispielsweise mittels der Aktoren einer Servolenkung und/oder durch einen weiteren Aktor, z.B. einen Umwucht-Aktor, z.B. innerhalb des Lenkrads bzw. manuellen Steuermittels erzeugt werden. Die haptische Fahrerinformation kann z.B. zumindest eine wesentliche Frequenzkomponente in einem Frequenzbereich von 1 - 40 Hz, bevorzugt 12 - 30 Hz, aufweisen. Eine solche haptische Information kann vom Fahrer des Fahrzeugs besonders schnell z.B. über seine Hände am Lenkrad wahrgenommen werden. Durch das Erzeugen der haptischen Information an einem manuellen Steuermittel eines Fahrzeugs kann eine derart zu dem Fahrer übermittelte Information besonders schnell intuitiv durch den Fahrer des Fahrzeugs "begriffen" und ggf. in eine Handlung umgesetzt werden.

Bevorzugt kann im erfindungsgemäßen Verfahren auch ein (allgemeiner oder spezifischer) Wachheitszustand des Fahrers, seine Blickrichtung und/oder die Aufmerksamkeit des Fahrers berücksichtigt werden. Dabei kann z.B. bei einem abgewandten Blick des Fahrers und einem nicht hinreichenden Maß des haptischen Kontakts mit dem manuellen Steuermittel (Lenker, Lenkrad) des Fahrzeugs eine Fahrerinformation an einem (aktuell betätigten) Pedal oder Drehknopf des Fahrzeugs erzeugt werden. Die Fahrerinformation, insbesondere die Hilfs-Fahrerinformation kann an einem Pedal, beispielsweise durch eine Ansteuerung sogenannter Force-Feedback Aktoren, erzeugt werden. Die Hilfs-Fahrerinformation kann an einem der (bspw.) zwei Pedale des Fahrzeugs erzeugt werden, mit dem der Fuß des Fahrers einen (hinreichenden) Maß des haptischen Kontakts hat.

Es kann sich bei der Fahrerinformation um eine von einem Fahrerassistenzsystem bzw. von einem System für aktive Sicherheit ausgegebene Fahrerinformation handeln. Besonders bevorzugt handelt es sich dabei um eine Information zur Unterstützung des Fahrers bei der Führung des Fahrzeugs, insbesondere der Querführung des Fahrzeugs. Bevorzugt kann die Fahrerinformation abhängig von einer mit Mitteln des Fahrzeugs erfassten und interpretierten Umfeldinformation erzeugt werden.

Die Fahrerinformation kann dabei eine oder mehrere unterschiedliche Warnungen, Handlungsempfehlungen oder sonstige Informationen an den Fahrer des Fahrzeugs übermitteln bzw. repräsentieren. Beispielsweise kann die Fahrerinformation zur Position des Fahrzeugs in Relation zu Spurenmarkierungen und/oder beweglichen oder unbeweglichen Hindernissen in der Umgebung des Fahrzeugs repräsentieren. Ferner kann zumindest ein Parameter zur Erzeugung der haptischen Information, beispielsweise die Frequenz, Amplitude, Muster der haptischen Einwirkung abhängig von der Wichtigkeit, Eiligkeit und/oder Kritikabilität der Fahrerinformation gewählt sein.

Ein manuelles Steuermittel kann bevorzugt ein Steuermittel zur Lenkung des Fahrzeugs (Lenkrad eines Kraftfahrzeugs, Lenker eines Motorrads oder eine vergleichbare Vorrichtung) sein. Es kann das Steuermittel aber auch andere (ggf. nicht rund geformten) Steuerelemente zur Führung des Fahrzeugs umfassen, wobei die kontinuierliche Krafteinwirkung auf das Steuerelement in eine kontinuierliche odometrisehe Größe überführt wird. Eine Anwendung des Verfahrens auf das Lenkrad ist besonders vorteilhaft, weil dieses mit den haptisch sehr empfindlichen Handflächen des Fahrers gehalten wird.

Alternativ kann das Steuermittel auch ein Pedal des Fahrzeugs, z.B. ein Fahr- und/oder Bremspedal des Fahrzeugs sein. In diesem Zusammenhang kann die haptische Information beispielsweise als eine Vibrations- oder Krafteinwirkung des Pedals an den Fuß des Fahrers aufgefasst werden. Ferner kann das Steuermittel auch ein kombiniertes Steuermittel zur Steuerung der Fahrzeug-Querführung und/oder der Fahrzeug-Längsführung und/oder zur Manöversteuerung durch den Fahrer sein, wie z.B. ein "Joystick" oder eine sinngemäße Weiterbildung. Alternativ oder zusätzlich kann das Steuermittel ein Drehknopf, insbesondere ein universeller Druck-Drehknopf sein.

Die haptische Fahrerinformation kann ein oder mehrere Frequenzkomponenten mit einer jeweiligen Amplitude und einer jeweiligen Frequenz umfassen. Die Amplitude und/oder Frequenz der ein oder mehreren Frequenzkomponenten der haptischen Fahrerinformation können dann in Abhängigkeit von dem Vibrationsparameter im Fahrzeug angepasst werden. Insbesondere kann bewirkt werden, dass die haptische Fahrerinformation zumindest eine Frequenzkomponente mit einer bestimmten Frequenz umfasst, die eine Amplitude aufweist, die höher als die Amplitude einer Frequenzkomponente mit der bestimmten Frequenz der Vibrationen des Fahrzeugs ist. Die die spektrale Energie, bzw. eine spektrale Aufteilung der Energie der haptischen Fahrerinformation kann in Frequenzbereiche verschoben werden, in denen (entsprechend dem ermittelten Vibrationsparameter im Fahrzeug) die Vibrationen im Fahrzeug relativ wenig spektrale Energie aufweisen. Besonders bevorzugt umfasst das Verfahren dafür eine Verschiebung einer spektralen Energie der haptischen Fahrerinformation von einem oder mehreren Frequenzbereichen, in denen die Vibrationen im Fahrzeug eine relativ hohe spektrale Energie aufweisen (und somit einen erhöhten störenden Einfluss auf die haptische Fahrerinformation ausüben können), in einen oder mehrere Frequenzbereiche, in denen die Vibrationen im Fahrzeug relativ wenig spektrale Energie aufweisen. Dabei kann das Verfahren abhängig von dem ermittelten Vibrationsparameter im Fahrzeug auch eine Verteilung der haptischen Fahrerinformation z.B. auf zumindest zwei unterschiedliche Frequenzbereiche umfassen.

Insbesondere kann die haptische Fahrerinformation derart angepasst werden, dass der haptisch übertragene Reiz in einem bestimmten Frequenzbereich eine für Menschen wahrnehmbar höhere spektrale Energie aufweist als die Vibrationen im Fahrzeug. Alternativ oder zusätzlich kann eine Korrelation zwischen dem Frequenzspektrum der haptischen Fahrerinformation und der Vibrationen des Fahrzeugs zumindest reduziert und vorzugsweise minimiert werden. So kann gewährleistet werden, dass die haptische Fahrerinformation zuverlässig vom Fahrer des Fahrzeugs wahrgenommen werden kann.

Das erfindungsgemäße Verfahren kann das Ermitteln einer aktuellen und/oder prädizierten Fahrgeschwindigkeit des Fahrzeugs mit umfassen. Der Vibrationsparameter im Fahrzeug kann dann von der aktuellen und/oder prädizierten Fahrgeschwindigkeit des Fahrzeugs abhängig sein bzw. der Vibrationsparameter im Fahrzeug kann die aktuelle und/oder prädizierte Fahrgeschwindigkeit des Fahrzeugs berücksichtigen. Die haptische Fahrerinformation kann dann in Abhängigkeit von der Fahrgeschwindigkeit erzeugt bzw. angepasst werden. Insbesondere kann eine spektrale Zusammensetzung der haptischen Fahrerinformation von der Fahrgeschwindigkeit abhängen. So kann gewährleistet werden, dass die haptische Fahrerinformation auch bei unterschiedlichen Fahrgeschwindigkeiten in zuverlässiger Weise vom Fahrer wahrgenommen werden kann.

Das erfindungsgemäße Verfahren kann eine Prädiktion des Maßes des haptischen Kontakts des Fahrers des Fahrzeugs zu dem (bspw. manuellen) Steuermittel umfassen. Dabei können die Merkmale des Verfahrens entsprechend auf bzw. für die künftigen Fahrerinformationen vorab ausgeführt bzw. angepasst werden. Die Prädiktion des Maßes des haptischen Kontakts des Fahrers zum Steuermittel kann auch abhängig von einer prädizierten Verkehrssituation für eine nahe Zukunft und/oder abhängig von einem prädizierten Automatisierungsgrad eines zumindest teilweise automatisiert fahrenden Fahrzeugs erfolgen. Beispielsweise, falls der Automatisierungsgrad steigt oder als steigend erkannt wird, kann von einem tendenziell geringeren haptischen Kontakt mit der Handfläche des Fahrers ausgegangen werden.

Eine Intensität und/oder eine Amplitude der haptischen Fahrerinformation können mit einem steigenden Maß von Unebenheiten der befahrenen Fahrbahn steigen. Alternativ oder ergänzend können eine Intensität und/oder eine Amplitude der haptischen Fahrerinformation mit steigender Fahrgeschwindigkeit steigen. Alternativ oder ergänzend können eine Intensität und/oder eine Amplitude der haptischen Fahrerinformation mit einem Kombinationswert (z.B. mit einem Produkt) aus dem Maß von Fahrbahn-Unebenheiten und der Fahrgeschwindigkeit steigen. So kann gewährleistet werden, dass die haptische Fahrerinformation auch bei unterschiedlichen Fahrsituationen in zuverlässiger Weise von einem Fahrer wahrgenommen werden kann.

Der Vibrationsparameter im Fahrzeug kann ein aktuelles Maß von Vibrationen des Fahrzeugs und eine prädizierte zukünftige Veränderung des Maßes von Vibrationen des Fahrzeugs repräsentieren. Dabei kann die prädizierte zukünftige Veränderung des Maßes von Vibrationen des Fahrzeugs insbesondere von einer geplanten Trajektorie des Fahrzeugs abhängen. So kann die haptische Fahrerinformation bereits im Vorfeld angepasst werden, so dass die Zuverlässigkeit der Wahrnehmung weiter erhöht wird. Als die Trajektorie des Fahrzeugs ist in diesem Zusammenhang insbesondere die Trajektorie des Mittelpunkts, der Kontur, der Räder, etc. des Fahrzeugs, z.B. relativ zu Fahrbahnunebenheiten, Fahrbahnrand, Spurrinnen, etc. zu verstehen.

Zumindest ein Vibrationsparameter im Fahrzeug kann auch abhängig von akustischen Schwingungen, z.B. Musik, Lärm, diversen Signalen, insbesondere von einem Pegel von akustischen Schwingungen, im Innenraum des Fahrzeugs ermittelt werden. Beispielsweise können mittels eines Innenraum-Mikrofons akustische Schwingungen im Innenraum des Fahrzeugs erfasst werden. Des Weiteren kann die spektrale Energie eines akustischen Signals in einem für die Wahrnehmung haptischer Fahrerinformation relevanten Frequenzbereich (z.B. von 100Hz, 50Hz oder weniger) ermittelt werden. Das Erzeugen der Fahrerinformation kann dann in Abhängigkeit von den Amplituden, Frequenzen oder spektralen Energieverteilung in bestimmten Frequenzbereichen angepasst werden. So können weitere Vibrationsquellen berücksichtigt werden, um die Qualität der Wahrnehmung der haptischen Fahrerinformation zu verbessern.

Die haptische Fahrerinformation kann in einem vorausliegenden (d.h. in der Zukunft liegenden) Zeitintervall ausgegeben werden. Das Ermitteln von dem Vibrationsparameter im Fahrzeug kann das Ermitteln von Parameter von Vibrationen für zumindest einen Teil des vorausliegenden Zeitintervalls umfassen. Somit kann bereits im Vorfeld eine Anpassung der haptischen Fahrerinformation vorgenommen werden, so dass die Qualität der Wahrnehmung der haptischen Fahrerinformation weiter verbessert werden kann.

Die haptische Fahrerinformation kann derart erzeugt bzw. angepasst werden, dass die haptische Fahrerinformation eine erste Wahrnehmbarkeitsschelle für einen Fahrer des Fahrzeugs überschreitet, wobei der Fahrer das (bspw. manuelle) Steuermittel berührt. Alternativ oder ergänzend kann die haptische Fahrerinformation derart erzeugt bzw. angepasst werden, dass die haptische Fahrerinformation eine zweite Wahrnehmbarkeitsschelle für einen weiteren Insassen des Fahrzeugs unterschreitet, der das Steuermittel nicht berührt. Die erste Wahrnehmbarkeitsschwelle und die zweite Wahrnehmbarkeitsschelle können dabei abhängig von dem ermittelten haptischen Kontakt zwischen dem Fahrer des Fahrzeugs und dem Steuermittel des Fahrzeugs ermittelt werden. Ferner kann die erste Wahrnehmbarkeitsschwelle und/oder die zweite Wahrnehmbarkeitsschwelle auch in Abhängigkeit von dem Vibrationsparameter im Fahrzeug ermittelt werden. Beispielsweise können Kennfelder für Wahrnehmbarkeitsschellen ermittelt werden (z.B. anhand von psychohaptischen Tests), die die erste und/oder zweite Wahrnehmbarkeitsschwelle als Funktion des Vibrationsparameter im Fahrzeug anzeigen. Es können dann für den ermittelten Vibrationsparameter im Fahrzeug eine erste Wahrnehmbarkeitsschelle für den Fahrer des Fahrzeugs und eine zweite Wahrnehmbarkeitsschelle für einen weiteren Insassen des Fahrzeugs ermittelt werden. Die Fahrerinformation bzw. die Hilfs-Fahrerinformation können daraufhin derart erzeugt, insbesondere dimensioniert werden, dass diese die erste Wahrnehmbarkeitsschelle hinreichend überschreiten und die zweite Wahrnehmbarkeitsschelle hinreichend unterschreiten.

So können die Wahrnehmbarkeit und/oder der Komfort für den Fahrer oder weitere die Fahrzeug-Insassen weiter erhöht werden.

Ein zeitlicher Verlauf einer Amplitude und/oder einer Frequenz der haptischen Fahrerinformation kann dann in Abhängigkeit von der Wahrnehmbarkeitsschelle angepasst werden. Insbesondere kann bewirkt werden, dass eine Korrelation zwischen dem zeitlichen Verlauf der Vibrationen im Fahrzeug und dem zeitlichen Verlauf der haptischen Fahrerinformation reduziert, ggf. minimiert, wird. So kann die Qualität der Wahrnehmung der haptischen Fahrerinformation weiter verbessert werden.

Ferner kann das Verfahren das Erzeugen von zumindest zwei unterschiedlichen haptischen Fahrerinformationen umfassen, wobei die zumindest zwei haptischen Fahrerinformationen unterschiedliche Informationen (Botschaften) an den Fahrer des Fahrzeugs über zumindest ein Steuermittel des Fahrzeugs übermitteln. Dabei kann das Erzeugen von zumindest zwei unterschiedlichen haptischen Fahrerinformationen mit unterschiedlicher Bedeutung in einem unterschiedlichen Maße abhängig von dem ermittelten Vibrationsparameter im Fahrzeug sein bzw. bei Veränderung des Vibrationsparameter im Fahrzeug angepasst werden. Die zwei unterschiedlichen Fahrerinformationen können (separat, d.h. jede für sich) auf unterschiedliche Weise abhängig von dem Maß des haptischen Kontakts des Fahrers zum Steuermittel erzeugt bzw. angepasst werden.

Daher kann mit dem Verfahren eine Fahrerinformation, (ggf. umfassend eine haptische Fahrerinformation und eine nicht-haptische Fahrerinformation bzw. eine im Verfahren adaptiv ausgegebene Hilfs-Fahrerinformation) erzeugt werden, bei der eine Information für den Fahrer des Fahrzeugs komfortabler und sicherer übermittelbar ist. Somit können die im Straßenverkehr (häufig überlastete) visuelle und akustische Wahrnehmungskanäle des Fahrers und der Insassen geschont werden. Ferner kann eine bessere (d.h. klare) Unterscheidbarkeit von zumindest zwei unterschiedlichen haptischen Informationen oder von zumindest zwei unterschiedlichen Maßen von Kritikabilität einer Information durch den Fahrer in unterschiedlichen Situationen dargestellt werden.

Beispielsweise kann dabei zumindest eine erste haptische Fahrerinformation zum Repräsentieren einer nicht oder weniger sicherheitsrelevanten Information und eine zweite haptische Fahrerinformationen zum Repräsentieren einer sicherheitskritischen Information erzeugt werden. Dabei kann die erste nicht sicherheitskritische Fahrerinformation derart abhängig von dem ermittelten Vibrationsparameter im Fahrzeug erzeugt werden, dass keine unkomfortable Einwirkung auf die Wahrnehmung des Fahrers erfolgt. Dabei kann die zweite sicherheitskritische Fahrerinformation derart abhängig von dem ermittelten Vibrationsparameter im Fahrzeug erzeugt werden, dass diese mit einer hohen Wahrscheinlichkeit wahrgenommen wird und/oder von der ersten Fahrerinformation sicher unterscheidbar ist.

Die Erfindung umfasst eine Vorrichtung für ein Fahrzeug. Die Vorrichtung ist eingerichtet, ein Maß oder mehrere Maße des haptischen Kontakts zwischen dem Fahrer und dem Steuermittel des Fahrzeugs zu ermitteln und/oder einen Vibrationsparameter im Fahrzeug im Sinne des vorhergehend beschriebenen Verfahrens zu ermitteln. Außerdem ist die Vorrichtung eingerichtet, zu veranlassen, dass in Abhängigkeit von dem ermittelten Maß des haptischen Kontakts und/oder dem ermittelten Vibrationsparameter im Fahrzeug, eine haptische Fahrerinformation am Steuermittel und/oder eine der Fahrerinformation entsprechende und vom Fahrer über einen anderen Wahrnehmungskanal wahrnehmbare Hilfs-Fahrerinformation, erzeugt, insbesondere angepasst wird.

Die Erfindung umfasst ein Fahrzeug (insbesondere ein Straßenkraftfahrzeug, z.B. ein Personenkraftwagen, ein Lastkraftwagen oder ein Zweirad, z.B. Motorrad), das die in diesem Dokument beschriebene Vorrichtung beinhaltet und in der das vorliegend beschriebene Verfahren ausgeführt wird bzw. ausführbar ist. Bei dem Fahrzeug handelt es sich insbesondere um ein Kraftfahrzeug oder Zweirad, z.B. Motorrad. Daraus resultieren zahlreiche hier diskutierte und weitere von einem Fachmann unschwer nachvollziehbare Vorteile. Alternativ kann das Verfahren auch auf Luftfahrzeuge oder Wasserfahrzeuge angewandt werden.

Die Erfindung umfasst ein Computerprogramm, insbesondere ein Computerprogrammprodukt umfassend das Computerprogramm, wobei das Computerprogramm ausgebildet ist, auf einer Datenverarbeitungsvorrichtung eines Fahrzeug oder eines mobilen Anwendergeräts einen Teil des erfindungsgemäßen Verfahrens oder eine vorteilhafte Ausgestaltung des Verfahrens gemäß einem oder mehrerer weiterer Merkmale des Verfahrens bei seiner Ausführung durchzuführen. Insbesondere handelt es sich bei dem Computerprogramm um ein Softwareprogramm, welches beispielsweise als eine App ( = "Applikation") auf einer im Fahrzeug verbauten oder mitführbaren Steuervorrichtung lauffähig ist. Ein Teil der Steuervorrichtung kann dabei ein mobiles Anwendergerät sein.

Das Computerprogramm bzw. Computerprogrammprodukt umfasst dabei einen ausführbaren Programmcode, der bei einer Ausführung durch eine Datenverarbeitungsvorrichtung zumindest einen Teil des Verfahrens gemäß einem vorliegend beschriebenen Aspekt oder eine vorteilhafte Ausgestaltung des vorliegend beschriebenen Verfahrens ausführt. Das Computerprogrammprodukt kann dabei als ein Update eines bisherigen Computerprogramms ausgebildet sein, welches beispielsweise im Rahmen einer Funktionserweiterung, beispielsweise im Rahmen eines sogenannten Remote Software Update die Teile des Computerprogramms bzw. des entsprechenden Programmcode für eine entsprechende Steuervorrichtung des Fahrzeug umfasst.

Es ist zu beachten, dass die in diesem Dokument beschriebenen Verfahren, Vorrichtungen und Systeme sowohl alleine, als auch in Kombination mit anderen in diesem Dokument beschriebenen Verfahren, Vorrichtungen und Systemen verwendet werden können. Des Weiteren können jegliche Aspekte der in diesem Dokument beschriebenen Verfahren, Vorrichtungen und Systemen in vielfältiger Weise miteinander kombiniert werden. Insbesondere können die Merkmale der Ansprüche in vielfältiger Weise miteinander kombiniert werden.

Nachstehend wird die Erfindung anhand eines Ausführungsbeispiels ohne Einschränkung der Allgemeinheit näher beschrieben. Dabei zeigt die einzige Figur beispielhafte Komponenten eines Fahrzeugs; mit Hilfe der das vorliegend beschriebene Verfahrens zur Erzeugung einer haptischen Fahrerinformation durchführbar ist.

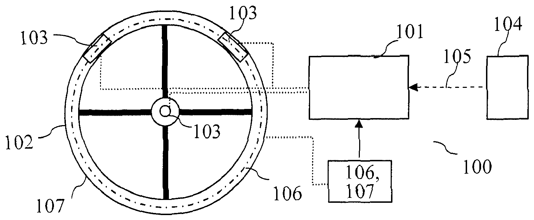

Wie eingangs dargelegt, befasst sich das vorliegende Dokument mit der zuverlässigen Übermittlung von Information an einen Fahrer eines Fahrzeugs über ein bspw. manuelles Steuermittel (insbesondere über ein Lenkrad) des Fahrzeugs, alternativ aber auch über ein anderes Steuermittel, so bspw. ein Pedal. In diesem Zusammenhang zeigt die einzige Fig. 1 beispielhafte Komponenten eines Fahrzeugs 100. Insbesondere zeigt Fig. 1 ein Lenkrad 102 eines Fahrzeugs 100, mit dem der Fahrer des Fahrzeugs 100 die Querführung des Fahrzeugs 100 steuern kann. Das Lenkrad 102 kann dabei als ein Beispiel für ein manuelles Steuermittel des Fahrzeugs 100 betrachtet werden. Alternativ oder ergänzend könnte z.B. ein Steuerknüppel als manuelles Steuermittel verwendet werden, um das Fahrzeug 100 entsprechend zu führen.

Das Lenkrad 102 umfasst ein oder mehrere haptische Aktuatoren 103, die eingerichtet sind, ein haptisch wahrnehmbares Signal (insbesondere eine Vibration) am Lenkrad 102 zu generieren, so dass das Signal durch eine Hand des Fahrers des Fahrzeugs 100 erfasst werden kann. Die ein oder mehreren haptischen Aktuatoren 103 können durch eine Steuereinheit 101 des Fahrzeugs 100 angesteuert werden. Beispielsweise können die ein oder mehreren Aktuatoren 103 angesteuert werden, um dem Fahrer des Fahrzeugs 100 zu signalisieren, dass das Fahrzeug 100 eine aktuelle Fahrspur verlässt. Anhand der Aktuatoren 103 können insbesondere Lenkradvibrationen zur Übermittlung von Informationen oder Warnungen von unterschiedlichen Fahrerassistenzsystemen generiert werden. Dabei können die Lenkradvibrationen mit Unwucht-Aktuatoren 103 im Lenkrad 102 oder mit einem Servolenkungs-Aktuator 103 erzeugt werden. Die Stärke der Lenkradvibrationen kann ggf. in einem Menü einer Nutzerschnittstelle des Fahrzeugs 100 eingestellt werden (z.B. in drei Stufen).

Ferner umfasst das Lenkrad 102 auch einen oder mehrere Sensoren 106, 107, die im vorliegenden Beispiel in das Lenkrad 102 integriert sind. Diese sind in der Figur mit einer strichpunktierten Linie gekennzeichnet. Im vorliegenden Beispiel handelt es sich um eine sogenannte kapazitive Sensormatte. Dabei kann es sich um einen an sich bekannten oder zur Ausführung des Verfahrens weitergebildeten sogenannten "Hands-On-Sensor" und/oder "Hands-Off-Sensor" handeln. Bevorzugt kann der Sensor bzw. eine damit verbundene Recheneinheit ferner dazu ausgestaltet zwei oder mehrere Muster des haptischen Kontakts zu erkennen bzw. zu unterscheiden.

Die 106 und 107 Sensoren können auch als Teile (Bereiche) eines Sensors ausgestaltet sein, die bevorzugt auch separate Messwerte liefern können. Der oder die Sensor(en) 106, 107 kann/können eine Berührung des Steuermittels bzw. Lenkrads 102 und das Umgreifen des Steuermittels/Lenkrads 102 detektieren. Dabei kann mit Hilfe den Daten des Sensors 106, 107 ermittelt werden, auf welcher Seite des Lenkrads 102, beispielsweise in der Position der eingezeichneten Bezugsziffern 106 und 107 ein haptischer Kontakt mit dem Fahrer des Fahrzeugs besteht. Bevorzugt wird der haptische Kontakt durch ein oder mehrere bestimmte Maßzahl(en) oder Größe(n) repräsentiert. Dabei kann unterschieden werden zwischen einer leichten (nahezu kraftlosen) Berührung des Steuerelements 102 mit einer Hand oder mit zwei Händen und einem Umgreifen des Steuerelements 102 mit einer oder mit zwei Händen des Fahrers und einer ausdrücklichen Kraftkopplung zwischen der einen oder zwei Händen des Fahrers und dem Steuerelement 102, insbesondere repräsentiert durch ein enges und/oder flächiges Anliegen oder eine übertragene Reibungskraft. Ferner wird auch ermittelt, wenn kein oder kein hinreichender haptischer Kontakt zwischen zumindest einer Hand des Fahrers und dem Steuermittel/Lenkrad 102 besteht, insbesondere wenn ein vorausbestimmtes Maß, welches für die Übertragung oder Unterscheidung einer (bestimmten) haptischen Fahrerinformation erforderlich ist, nicht mit einem hinreichenden haptischen Kontakt erfüllt wird.

Als Maß des haptischen Kontakts zwischen dem Fahrer des Fahrzeugs und dem Steuerelement kann bspw. ein Maß, insbesondere ein Muster (z.B. Flächenmuster und/oder ein zeitliches Muster) repräsentierend eine kapazitive Kopplung, die durch eine und/oder zwei Hände des Fahrers verursacht wird, genutzt werden. Alternativ kann zu diesem Zweck auch ein induktives Sensierungsprinzip genutzt werden. In einer Ausführungsform kann alternativ oder zusätzlich ein Kamerasystem im Innenraum des Fahrzeugs genutzt werden, um das Maß des haptischen Kontakts zwischen den Händen des Fahrers und dem Steuerelement z.B. mittels einer optischen Objekterkennung zu erfassen.

Ein Maß für einen haptischen Kontakt zwischen dem Fahrer des Fahrzeugs und dem Steuermittel zur Steuerung des Fahrzeugs wird ermittelt. Eine Fahrerinformation umfassend zumindest eine haptische zu übertragende Fahrerinformation wird erzeugt. Im Rahmen des Verfahrens wird dann entschieden ob und welcher Anteil der Fahrerinformation an dem manuellen Steuermittel, hier am Lenkrad 102 ausgegeben wird, und zwar in Abhängigkeit von dem ermittelten Maß des haptischen Kontakts zwischen dem Fahrer des Fahrzeugs und dem Steuermittel 102 zur Steuerung des Fahrzeugs.

In diesem Beispiel können mehrere (prinzipiell) unterschiedliche Maße des haptischen Kontakts ermittelt und berücksichtigt werden, nämlich ein haptischer Kontakt mit dem Steuermittel mit einer Hand oder mit zwei Händen, und/oder das Umgreifen oder nicht Umgreifen des Steuermittels mit oder ohne der Stärke und der Position des Umgreifens. Weiterhin ein Stellen des manuellen Steuermittels mittels des haptischen Kontakts, und/oder ein Druckverteilung oder Druckverteilungsmuster.

Das Verfahren kann ferner folgendes umfassen: Das Ermitteln einer zu übertragenden Fahrerinformation, das Ermitteln, ob ein vorausbestimmtes Maß eines haptischen Kontakts besteht, das Ausgeben der besagten Fahrerinformation dann, wenn erkannt wird, dass ein hinreichender haptischer Kontakt (anhand der ermittelten Maße für den haptischen Kontakt) besteht, sowie ggf. ein Abwarten, insbesondere für eine maximale vorgegebenen Zeitdauer, bis das vorausbestimmte hinreichende Maß des haptischen Kontakts hergestellt wird, sodann ein Ausgeben der Fahrerinformation, sobald erkannt wird, dass ein hinreichender haptischer Kontakt besteht, oder es wird dann die Fahrerinformation in einer veränderten Form ausgegeben, insbesondere über einen anderen Wahrnehmungskanal des Fahrers.

Wird das Fahrzeug auf einer unebenen bzw. schlechten Fahrbahn oder auf einer Fahrbahn mit bewegt, so kann es in besonders ungünstigen Fällen möglicherweise vorkommen, dass eine Lenkradvibration, mit welcher eine Fahrerinformation übertragen werden soll, für den Fahrer unbemerkt bleibt. Andererseits können auf einer sehr glatten, ebenen Fahrbahn (relativ starke) Lenkradvibrationen zur Übertragung von Fahrerinformationen vom Fahrer des Fahrzeugs 100 als störend empfunden werden. Ggf. könnten dann solche Lenkradvibrationen auch von einem anderen Insassen des Fahrzeugs als störend wahrgenommen werden. Es wird daher eine adaptive Anpassung der haptischen Fahrerinformation eines manuellen Steuermittels 102 eines Fahrzeugs 100, (z.B. abhängig von den aus einem Fahrbahnprofil bekannten Unebenheiten der befahrenen Fahrbahn) vorgeschlagen. Dabei kann die haptische Fahrerinformation abhängig von einem oder mehreren Faktoren angepasst werden, welche eine menschliche Wahrnehmung der haptischen Fahrerinformation beeinflussen.

In diesem Beispiel des Verfahrens werden mehrere (prinzipiell) unterschiedliche Arten der Vibrationsparameter 105 des Fahrzeugs bzw. im Fahrzeug ermittelt und berücksichtigt. Es werden Parameter für Fahrzeugvibrationen, z.B. abhängig von einer aktuellen Betriebsart oder Leistung des Fahrzeugmotors der Servolenkung, etc. ermittelt. Es werden Vibrationen im Fahrzeug ermittelt, die aufgrund der Fahrbahnunebenheiten entstehen, und durch das Fahrwerk des Fahrzeugs an die Fahrgastzelle und/oder den Lenkstrang des Fahrzeugs weitergeleitet werden. Es werden Vibrationen im Zusammenhang mit einer lauten Musik im Innenraum des Fahrzeugs, insbesondere der Leistung der Bass-Anteile und/oder Klirren im Innenraum des Fahrzeugs ermittelt.

Insbesondere kann das Fahrzeug 100 einen Sensor 104 umfassen, der eingerichtet ist, einen Vibrationsparameter 105 im Fahrzeug 100 (und insbesondere in Bezug auf Vibrationen am manuellen Steuermittel 102 des Fahrzeugs 100) zu erfassen. Die Steuereinheit 101 kann eingerichtet sein, die Aktuatoren 103 des manuellen Steuermittels 102 in Abhängigkeit von dem Maß des haptischen Kontakts und/oder dem ermittelten Vibrationsparameter 105 anzusteuern. Insbesondere kann die Stärke der durch einen Aktuator 103 generierten Fahrerinformation erhöht werden, wenn der Vibrationsparameter 105 ein relativ hohes Maß an Vibrationen im Fahrzeug 100 (insbesondere am manuellen Steuermittel 102) in Kombination mit einem unzureichenden Maß des haptischen Kontakts anzeigt.

Andererseits kann die Stärke der durch einen Aktuator 103 generierten Fahrerinformation reduziert werden, wenn der Vibrationsparameter 105 ein relativ niedriges Maß an Vibrationen im Fahrzeug 100 (insbesondere am manuellen Steuermittel 102) anzeigt. So kann gewährleistet werden, dass eine haptische Fahrerinformation über ein manuelles Steuermittel 102 eines Fahrzeugs 100 in zuverlässiger und komfortabler Weise durch einen Fahrer des Fahrzeugs 100 erfasst werden kann.

Ein entsprechendes Verfahren zur Erzeugung einer haptischen Fahrerinformation im Fahrzeug 100 umfasst das Ermitteln eines Vibrationsparameters 105 bzw. einer entsprechenden Information, welche ein, z.B. kumuliertes Maß von Vibrationen im Fahrzeug 100 anzeigt. Außerdem umfasst das Verfahren das Erzeugen bzw. das Anpassen einer haptischen Fahrerinformation am hier manuellen Steuermittel 102, insbesondere am Lenkrad, in Abhängigkeit von dem ermittelten Maß des haptischen Kontakts und/oder dem Vibrationsparameter 105.

Die haptische Fahrerinformation kann insbesondere eine warnende oder informierende Vibration am Lenkrad 102 umfassen, die z.B. abhängig von einer möglichen Überschreitung einer Fahrbahnmarkierung oder abhängig von einer (Seiten-)Kollisionsgefahr erzeugt wird. Des Weiteren kann die haptische Fahrerinformation eine gezielt mittels der Aktuatoren 103 erzeugte gerichtete Vibration des Lenkrads 102 umfassen, bei der sich eine Krafteinwirkung und/oder ein Widerstand in eine erste Lenk-Drehrichtung und in eine zweite Lenk-Drehrichtung unterscheiden. Dabei kann die erste und/oder die zweite Dreh-Richtung eine Information über eine empfohlene oder nicht empfohlene Lenk-Drehrichtung an den Fahrer übermitteln.

Die über den Vibrationsparameter 105 erfassten Vibrationen im Fahrzeug 100 können insbesondere Vibrationen umfassen, die am Lenkrad 102 des Fahrzeugs 100 vorliegen und unabhängig von den durch die Aktuatoren 103 erzeugten Vibrationen sind. Bevorzugt werden Vibrationsparameter im Fahrzeug im Frequenzbereich von 0,5 - 50 Hz berücksichtigt. Bevorzugt werden mehrere (prinzipiell unterschiedliche Arten der Vibrationen im Fahrzeug berücksichtigt,

Es kann das Maß an ermittelten oder vorhergesagten Vibrationsparameter 105 einen Amplitudenwert und/oder einen Frequenzwert und/oder einen kumulierten Wahrnehmungswert umfassen. Der Vibrationsparameter 105 kann dabei für ein Zeitintervall in der nahen Zukunft vorausermittelt bzw. geschätzt werden. Ein voraus ermitteltes bzw. geschätztes Maß für den Vibrationsparameter 105 zum Zeitintervall der beabsichtigten Ausgabe einer haptischen Signalisierung an den Fahrer (als Fahrerinformation) kann dabei auch vom aktuellen (bzw. aktuell gemessenen) Maß der Vibrationen im Fahrzeug 100 abhängen. Insbesondere kann der zumindest eine Vibrationsparameter 105 abhängig von dem aktuellen (bzw. aktuell gemessenen oder geschätzten) Maß an Vibrationen im Fahrzeug 100 entsprechen, insbesondere wenn keine wesentliche Veränderung dieses Maßes vorausermittelt wurde.

Das Variieren der haptischen Fahrerinformation kann ein Umschalten von mehreren Intensitätsstufen der zu übermittelnden Fahrerinformation umfassen. Bevorzugt können die Parameter der haptischen Fahrerinformation weitgehend zeitkontinuierlich und/oder in kleinen (kaum wahrnehmbaren) (Parameter-)Stufen an die zu erwartenden Vibrationsparameter 105 angepasst werden.

Der bzw. die Vibrationsparameter 105 kann/können abhängig von einem Maß der Fahrbahnunebenheiten in der Umgebung des Fahrzeugs 100 ermittelt bzw. geschätzt werden, insbesondere in einem Fahrbahnabschnitt auf der voraussichtlichen Fahrzeugtrajektorie des Fahrzeugs 100. Besonders bevorzugt bezieht sich dabei das Maß an Unebenheiten auf einen Fahrbahnabschnitt, der in demjenigen Zeitintervall befahren wird, an dem auch die haptische Fahrerinformation ausgegeben wird oder noch ausgegeben werden soll.

Ein Maß von Fahrbahnunebenheiten kann basierend auf verschiedenen Informationen ermittelt werden, so bspw. basierend auf Information über die Fahrbahnbeschaffenheit, (vereinfacht: ein Maß der Fahrbahnqualität) aus einer Navigationskarte und/oder basierend auf Sensordaten von zumindest einem Fahrzeugsensor, insbesondere einem Frontkamerasystem des Fahrzeugs und/oder Sensordaten zumindest eines vertikaldynamischen Sensors (insbesondere eines zur Erfassung von senkrechten Einwirkungen, Neigen, Wanken, Verteilung der auf die Räder wirkender Kräfte, etc.) und/oder basierend auf Sensordaten zumindest eines Inertialsensors (Beschleunigungssensors) des Fahrzeugs 100 und/oder basierend auf Sensordaten von einem Lenkradsensor des Fahrzeugs und/oder erfassten Krafteinflüssen oder Frequenzwerten der Einflüsse auf ein Servolenkungssystem des Fahrzeugs .Besonders bevorzugt ist dabei ein kombinierter Ansatz, bei dem ein aktueller Vibrationsparameter 105, insbesondere sensorisch ermittelt wird und eine Information eines das Umfeld erfassenden Sensors des Fahrzeugs über eine (noch kommende oder erwartete) Veränderung des Maßes, das die Fahrbahnunebenheiten in der geplanten Fahrzeugtrajektorie repräsentiert, berücksichtigt wird.

Wie weiter oben dargelegt können insbesondere eine Amplitude und/oder ein Frequenzwert einer zu übermittelnden haptischen Fahrerinformation angepasst abhängig vom den Vibrationsparameter 105 variiert werden. Besonders bevorzugt kann die haptische Fahrerinformation anhand beider Parameter Amplitude und Frequenz geeignet variiert werden. Dabei kann die haptische Fahrerinformation zwei oder mehr Frequenzkomponenten oder ein Frequenzmuster umfassen. Die Frequenzwerte können dabei Spektralparameter umfassen, z.B. bei zwei oder mehreren Frequenzen.

Die haptische Fahrerinformation, insbesondere eine Frequenz der haptischen Fahrerinformation, kann abhängig von der aktuellen oder für die nahe Zukunft vorausgesagten Fahrzeuggeschwindigkeit variiert werden. Eine als Vibrationsparameter 105 festgestellte Vibrationsfrequenz des Lenkrads 102, welche durch das Befahren einer Fahrbahn verursacht wird, hängt nämlich typischerweise von der Fahrgeschwindigkeit des Fahrzeugs ab. Als Folge daraus hängt auch die Qualität der Wahrnehmung einer zusätzlichen für die Übermittlung einer haptischen Fahrerinformation künstlich erzeugte Vibration am Lenkrad von der Fahrzeuggeschwindigkeit ab. Bei einer langsamen Fahrt werden typischerweise relativ niedrige Vibrationsfrequenzen (bei relativ niedrigen Frequenzen) generiert, wobei die Vibrationsfrequenzen typischerweise mit steigenden Fahrgeschwindigkeiten steigen und ihren Frequenzen verändern.

Die künstlich erzeugten Kräfte bzw. Vibration der haptischen Fahrerinformation können derart gewählt bzw. variiert werden, dass die haptische Fahrerinformation möglichst wenig durch die durch die Fahrbahnunebenheiten bei der aktuellen Fahrgeschwindigkeit verursachten Vibration gestört, bspw. überlagert, wird. Folglich kann die haptische Fahrerinformation von der Fahrgeschwindigkeit des Fahrzeugs abhängen, und in Abhängigkeit von der Fahrgeschwindigkeit angepasst werden. Ein oder mehrere Frequenzen der künstlich erzeugten haptischen Fahrerinformation können derart gewählt werden, dass ein Maskierungseffekt der Wahrnehmung der haptischen Fahrerinformation durch die Vibrationen im Fahrzeug vermieden wird. Dabei können die Frequenzwerte, die ähnlich zu den Frequenzwerten der Vibrationen im Fahrzeug sind, vermieden werden. Des Weiteren können abweichende Frequenzwerte bevorzugt werden. So können Interferenzen bzw. ein "Übersprechen" zwischen den Fahrzeug-Vibrationen und der haptischen Fahrerinformation in Bezug auf die menschliche Wahrnehmung vermieden werden. Ferner können im Verfahren auch aus der Wahrnehmungswissenschaft und Psychooptik bekannten Maskierungseffekte berücksichtigt werden.

Die (z.B. für die nächsten Sekunden) vorausgesagte Fahrzeuggeschwindigkeit des Fahrzeugs 100 kann aus der aktuellen Geschwindigkeit und Stellungen von Fahr- und/oder Bremspedalen des Fahrzeugs 100 ermittelt werden. Die Intensität der Lenkradvibration für die haptische Fahrerinformation kann im Wesentlichen proportional zu einem Produkt aus einem Maß an Fahrbahnunebenheiten und einem Geschwindigkeitswert sein, der die Fahrgeschwindigkeit des Fahrzeugs anzeigt. Beispielsweise kann eine relativ niedrige Rauigkeit der Fahrbahn bei einer niedrigen Fahrgeschwindigkeit zu einer relativ niedrigen Intensität der haptisch übermittelten Fahrerinformation führen. Des Weiteren können eine relativ starke Rauigkeit bei einer relativ niedrigen Fahrgeschwindigkeit bzw. eine relativ niedrige Rauigkeit bei einer relativ hohen Fahrgeschwindigkeit zu einer mittleren Intensität der haptisch zu übermittelnden Fahrerinformation führen. Außerdem kann eine relativ starke Rauigkeit der Fahrbahn bei einer relativ hohen Geschwindigkeit zu einer relativ starken Intensität der haptisch zu übermittelnden Fahrerinformation führen.

Diese Adaptivität der Intensität der Fahrerinformation kann auch von einer von einem Nutzer, d.h. dem Fahrer des Fahrzeugs gewählten Intensitäts-Einstellung abhängig sein. Dabei kann die Intensitäts-Einstellung (Intensitätsstufe) des Fahrers als ein weiterer multiplikativer Faktor angewandt werden.

Der Vibrationsparameter 105 kann einen zeitlichen Verlauf einer Amplitude und/oder einer Frequenz von Vibrationen im Fahrzeug anzeigen. Der Vibrationsparameter 105 kann insbesondere sensorisch ermittelt werden. Dabei kann eine Information eines das Fzg.-Umfeld erfassenden Sensors über eine Veränderung der Vibrationen im Fahrzeug 100, insbesondere wegen veränderter Fahrbahnunebenheiten in der Fahrzeugumgebung in Richtung der geplanten Fahrzeugtrajektorie, berücksichtigt werden. Ausgehend von einem für den aktuellen Zeitpunkt ermittelten Maß von Vibrationen im Fahrzeug und ausgehend von einem Faktor der Veränderung, der die Vibrationen im Fahrzeug beeinflusst (z.B. der Straßenrauigkeit im Zeitintervall, in dem eine Ausgabe einer haptischen Fahrerinformation (voraussichtlich) erfolgen wird), kann zuverlässig ein Maß der dann vorherrschenden Fahrzeug-Vibrationen 105 geschätzt werden.

Die haptische Fahrerinformation, insbesondere eine Amplitude und/oder ein Frequenzwert der haptischen Fahrerinformation, kann abhängig von einer Lautstärke und/oder einem Frequenzwert einer Sound-Anlage des Fahrzeugs oder von einem von einem Innenraum-Mikrofon gemessenen Sound-Wert variiert werden. Besonders bevorzugt werden dabei die Amplituden bzw. Pegel niedriger Frequenzwerte (50 Hz oder weniger, 100 Hz oder weniger, 200 Hz oder wenig) und insbesondere in einem Frequenzbereich von ca. 5 - 35 Hz berücksichtigt. Zumindest ein Innenraum-Mikrofon kann somit die Einflüsse der Sound-Anlage und/oder die Einflüsse von anderen Insassen auf die Fahrzeug-Vibrationen 105 erfassen. Das Innenraum-Mikrofon kann einem (in vielen Fahrzeugen vorhandenes oder mitgeführtes) Freisprechmikrofon und/oder Mikrofon zur Sprachsteuerung entsprechen.

Das erfindungsgemäße Verfahren kann weiter das Ermitteln eines Zeitintervalls in der nahen Zukunft erfassen, zu welchem zumindest eine haptische Fahrerinformation ausgegeben werden soll bzw. ausgegeben wird. Außerdem kann das Verfahren das Ermitteln von einer Amplitude und/oder von Frequenzwerten von ein oder mehreren Fahrzeug-Vibrationen 105 umfassen, die zumindest teilweise im selben Zeitintervall erfolgen (werden). Außerdem kann das erfindungsgemäße Verfahren das Variieren von einer Amplitude und/oder einem Frequenzwert der haptisch zu übertragenden Fahrerinformation umfassen, die zumindest teilweise in dem besagten Zeitintervall erfolgen soll. Ein Zeitintervall kann dabei auch durch einen (kurzen) Zeitpunkt repräsentiert werden.

Die haptische Fahrerinformation kann derart variiert werden, dass die Wahrnehmbarkeit der ausgegebenen haptischen Fahrerinformation die haptische Wahrnehmungsschwelle eines (repräsentativen bzw. statistischen) Menschen um ein vorgegebenes Maß überschreitet. Alternativ oder ergänzend kann die haptische Fahrerinformation derart variiert werden, dass die Wahrnehmbarkeit der ausgegebenen haptischen Fahrerinformation eine vorgegebene Störschwelle eines anderen Menschen als dem Fahrer, insbesondere der Wahrnehmungsposition eines anderen Insassen (z.B. Beifahrers) des Fahrzeugs um ein vorgegebenes Maß unterscheitet. Dabei kann die Wahrnehmbarkeit einer vorausermittelten Wahrnehmbarkeit zum Zeitintervall der Ausgabe der haptischen Fahrerinformation entsprechen.

Das Variieren der haptischen Fahrerinformation kann einer Zeitkurve folgen, die von einer Zeitkurve anhängig ist, mit der sich die Fahrzeug-Vibrationen 105 verändern. Insbesondere kann ein Verlauf von Amplitude und/oder Frequenzwert der haptischen Fahrerinformation nach einer zeitlichen Abhängigkeit (in Form einer Kurve) variiert werden, die von einer zeitlichen Abhängigkeit abhängig ist, die den zeitlichen Verlauf von Amplitude und/oder Frequenzwert der Fahrzeug-Vibrationen repräsentiert. Beispielsweise kann eine Intensität und/oder Amplitude der haptischen Fahrerinformation mit einem verbesserten haptischen Kontakt sinken, und/oder mit einer Verschlechterung des haptischen Kontakts sinken, und/oder mit steigenden Maß von Unebenheiten der befahrenen Fahrbahn steigen, und/oder mit einer steigenden Fahrgeschwindigkeit steigen, und/oder mit einem Kombinationswert aus dem Maß von Unebenheiten und der Fahrgeschwindigkeit steigen. Ferner kann zumindest ein Teil der Fahrerinformation derart entlang der Zeitachse positioniert, insbesondere vorgezogen, verschoben, ein oder mehrere Male wiederholt oder in zumindest zwei Teile aufteilt werden, dass die Wahrnehmbarkeit bzw. Unterscheidbarkeit durch den Fahrer erhöht wird und/oder eine Störung des Fahrers oder des Beifahrers vermieden wird.

Durch das vorliegend beschriebene Verfahren kann gewährleistet werden, dass eine haptische Fahrerinformation auch in unterschiedlichen Fahrsituationen verlässlich wahrnehmbar und nicht störend ist. Insbesondere können durch das beschriebene Verfahren haptische Fahrerinformationen generiert werden, die verlässlich von anderen Fahrzeugvibrationen unterscheidbar sind. Dabei können weiterhin vom Fahrer gewünschte und somit Nutzer-abhängige Einstellungen der Intensität der haptischen Fahrerinformation berücksichtigt werden.

## Patentansprüche

1. Verfahren zur Erzeugung und Übermittlung einer Fahrerinformation, wobei zumindest ein Teil der Fahrerinformation in Form einer haptischen Fahrerinformation an einem Steuermittel (102) eines Fahrzeugs (100) erzeugt wird, umfassend:
- Ermitteln eines Maßes für einen haptischen Kontakt zwischen dem Fahrer des Fahrzeugs und dem Steuermittel (102) zur Steuerung des Fahrzeugs; und
- Erzeugen der Fahrerinformation in Abhängigkeit von dem ermittelten Maß des haptischen Kontakts zwischen dem Fahrer und dem besagten Steuermittel (102) am Steuermittel als haptische Fahrerinformation und/oder Erzeugen einer der Fahrerinformation entsprechenden und vom Fahrer über einen anderen Wahrnehmungskanal wahrnehmbaren Hilfs-Fahrerinformation,
**dadurch gekennzeichnet, dass**
zumindest ein Vibrationsparameter (105) im Fahrzeug als Maß von im Fahrzeug (100) aktuell oder in der nahen Zukunft herrschenden Vibrationen ermittelt wird und abhängig hiervon
- die Amplitude und/oder Frequenz der haptischen Fahrerinformation angepasst wird, und/oder
- ein Zeitintervall oder Startzeitpunkt zur Ausgabe der haptischen Fahrerinformation angepasst wird, und/oder
- die Erzeugung zumindest ein Teils der haptischen Fahrerinformation auf andere Teile des Fahrzeugs verlagert wird.

2. Verfahren nach dem Anspruch 1, wobei die Amplitude und/oder Frequenz und/oder die Dauer der zu erzeugenden haptischen Fahrerinformation in Abhängigkeit von dem ermittelten Maß des haptischen Kontakts zwischen dem Fahrer des Fahrzeugs und dem Steuermittel (102) zur Steuerung des Fahrzeugs variiert oder eingestellt wird.

3. Verfahren nach einem der vorangegangenen Ansprüchen, wobei das Erzeugen der haptischen Fahrerinformation an dem Steuermittel (102) des Fahrzeugs abhängig vom ermittelten Maß des haptischen Kontakts und/oder von dem oder den ermittelten Vibrationsparameter(n) (105) zeitlich vorgezogen oder aufgeschoben wird, und/oder in zumindest zwei Teile aufgeteilt wird, und/oder - an ein bestimmtes Zeitintervall oder ein Ereignis angepasst wird.

4. Verfahren nach einem der vorangegangenen Ansprüchen, wobei ein Muster der haptischen Fahrerinformation abhängig von dem ermittelten Maß für einen haptischen Kontakt zwischen dem Fahrer des Fahrzeugs und dem Steuermittel zur Steuerung des Fahrzeugs, und/oder von dem/den ermittelten Vibrationsparameter(n) (105) gewählt oder angepasst wird.

5. Verfahren nach einem der vorangegangenen Ansprüche, wobei abhängig von dem ermittelten Maß für einen haptischen Kontakt zwischen dem Fahrer des Fahrzeugs und dem Steuermittel zur Steuerung des Fahrzeugs und/oder abhängig von dem/den ermittelten Vibrationsparameter(n) (105) eine zumindest teilweise Verlagerung der Fahrerinformation als Hilfs-Fahrerinformation auf zumindest einen anderen Wahrnehmungskanal des Fahrers erfolgt.

6. Verfahren nach einem der vorhergehenden Ansprüche, wobei der Vibrationsparameter (105) abhängig von Unebenheiten einer von dem Fahrzeug (100) zum aktuellen oder in einer nahen Zukunft liegenden Zeitintervall befahrenen Fahrbahnbereichs ermittelt wird.

7. Verfahren nach einem der vorhergehenden Ansprüche, wobei der Vibrationsparameter (105) basierend auf zumindest einer der folgenden Informationen und/oder Daten ermittelt wird:
- Informationen über die Beschaffenheit einer Fahrbahn aus einer digitalen Navigationskarte;
- Sensordaten eines Umfeldsensors des Fahrzeugs (100), der eingerichtet ist, einen Teil der von dem Fahrzeug (100) befahrenen Fahrbahn zu erfassen;
- Sensordaten eines vertikaldynamischen Sensors des Fahrzeugs (100);
- Sensordaten eines Inertialsensors und/oder Beschleunigungssensors des Fahrzeugs (100);
- einer Kenngröße, die einen Parameter eines Antriebssystems des Fahrzeugs (100) repräsentiert; und/oder
- Sensordaten eines Bewegungs- und/oder Kraftsensors an den manuellen Steuermitteln (102) des Fahrzeugs (100).

8. Verfahren nach einem der vorhergehenden Ansprüche, wobei
- die haptische Fahrerinformation ein oder mehrere Frequenzkomponenten mit einer jeweiligen Amplitude und einer jeweiligen Frequenz umfasst; und
- die Amplitude und/oder Frequenz der einen oder mehreren Frequenzkomponenten der haptischen Fahrerinformation abhängig von dem Maß für einen haptischen Kontakt zwischen dem Fahrer des Fahrzeugs und dem Steuermittel zur Steuerung des Fahrzeugs und/oder abhängig von dem ermittelten Vibrationsparameter (105)angepasst wird.

9. Verfahren nach einem der vorhergehenden Ansprüche, wobei
- der Vibrationsparameter (105) ein aktuelles Maß von Vibrationen im Fahrzeugs (100) und eine prädizierte zukünftige Veränderung des Maßes von Vibrationen im Fahrzeugs (100) repräsentiert und
- die prädizierte zukünftige Veränderung des Maßes von Vibrationen des Fahrzeugs (100) ermittelt wird.

10. Verfahren nach einem der vorhergehenden Ansprüche, wobei die haptische Fahrerinformation in einem vorausliegenden Zeitintervall ausgegeben werden soll; und das Ermitteln von einem oder mehreren Vibrationsparameter(n) (105) sich auf zumindest einen Teil des vorausliegenden Zeitintervalls bezieht.

11. Verfahren nach einem der vorhergehenden Ansprüche, wobei die Amplitude, Frequenz oder Muster der haptische Fahrerinformation derart gewählt wird, dass die haptische Fahrerinformation eine Störschwelle für den Fahrer des Fahrzeugs (100) unterscheitet, bei der die haptische Fahrerinformation als wesentlich unkomfortabel wahrgenommen wird, wobei die Störschwelle abhängig von der Vibrationsparameter im Fahrzeug und/oder von dem Maß des haptischen Kontakts zwischen dem Fahrer des Fahrzeugs und dem manuellen Steuermittel (102) zur Steuerung des Fahrzeugs gewählt wird.

12. Computerprogramm das eingerichtet ist, um auf einem Prozessor ausgeführt zu werden, und um dadurch das Verfahren gemäß einem der vorhergehenden Ansprüche auszuführen.

13. Vorrichtung zur Durchführung des Verfahren nach einem der vorangegangenen Ansprüche, welche eingerichtet ist für das Ermitteln eines Maßes des haptischen Kontakt zwischen dem Fahrer des Fahrzeugs und dem Steuermittel (102) zur Steuerung des Fahrzeugs und ferner eingerichtet ist für das Erzeugen und Übermitteln der Fahrerinformation in Abhängigkeit von dem ermittelten Maß des haptischen Kontakts zwischen dem Fahrer des Fahrzeugs und dem Steuermittel (102) und/oder des Vibrationsparameters (105) am Steuermittel als haptische Fahrerinformation und/oder als eine der Fahrerinformation entsprechende und vom Fahrer über einen anderen Wahrnehmungskanal wahrnehmbare Hilfs-Fahrerinformation.

## Claims

1. Method for producing and transmitting driver information, wherein at least part of the driver information is produced in the form of haptic driver information on a control means (102) of a vehicle (100), in particular on a manual control means (102), comprising:
- ascertaining a measure of a haptic contact between the driver of the vehicle and the control means (102) for controlling the vehicle; and
- producing the driver information on the basis of the ascertained measure of the haptic contact between the driver and said control means (102) on the control means as haptic driver information and/or producing auxiliary driver information that corresponds to the driver information and is perceptible by the driver via another perception channel,
**characterized in that**
at least one vibration parameter (105) in the vehicle is ascertained as a measure of vibrations prevailing in the vehicle (100) at present or in the near future and said vibration parameter(s) is/are taken as a basis for
- adjusting the amplitude and/or frequency of the haptic driver information, and/or
- adjusting a time interval or a starting time for output of the haptic driver information, and/or
- moving the production of at least part of the haptic driver information to other parts of the vehicle.

2. Method according to Claim 1, wherein the amplitude and/or frequency and/or the duration of the haptic driver information to be produced varies or is set on the basis of the ascertained measure of the haptic contact between the driver of the vehicle and the control means (102) for controlling the vehicle.

3. Method according to one of the preceding claims, wherein the producing of the haptic driver information on the control means (102) of the vehicle is brought forward or put back in time on the basis of the ascertained measure of the haptic contact and/or on the basis of the ascertained vibration parameter(s) (105), and/or is split into at least two parts, and/or is adjusted to suit a particular time interval or an event.

4. Method according to one of the preceding claims, wherein a pattern of the haptic driver information is chosen or adjusted on the basis of the ascertained measure of a haptic contact between the driver of the vehicle and the control means for controlling the vehicle, and/or on the basis of the ascertained vibration parameter(s) (105).

5. Method according to one of the preceding claims, wherein the ascertained measure of a haptic contact between the driver of the vehicle and the control means for controlling the vehicle and/or the ascertained vibration parameter(s) (105) is/are taken as a basis for the driver information as auxiliary driver information being at least partially moved to at least one other perception channel of the driver.

6. Method according to one of the preceding claims, wherein the vibration parameter (105) is ascertained on the basis of unevennesses of a road area travelled on by the vehicle (100) in the present time interval or in a time interval in the near future.

7. Method according to one of the preceding claims, wherein the vibration parameter (105) is ascertained on the basis of at least one of the following pieces of information and/or data:
- information about the condition of a road from a digital navigation map;
- sensor data of an ambient sensor of the vehicle (100) configured to detect part of the road travelled on by the vehicle (100);
- sensor data of a vertical dynamic sensor of the vehicle (100);
- sensor data of an inertial sensor and/or acceleration sensor of the vehicle (100);
- a characteristic quantity representing a parameter of a drive system of the vehicle (100); and/or
- sensor data of a motion and/or force sensor on the manual control means (102) of the vehicle (100).

8. Method according to one of the preceding claims, wherein
- the haptic driver information comprises one or more frequency components having a respective amplitude and a respective frequency; and
- the amplitude and/or frequency of the one or more frequency components of the haptic driver information is adjusted on the basis of the measure of a haptic contact between the driver of the vehicle and the control means for controlling the vehicle and/or on the basis of the ascertained vibration parameter (105).

9. Method according to one of the preceding claims, wherein
- the vibration parameter (105) represents a current measure of vibrations in the vehicle (100) and a predicted future change in the measure of vibrations in the vehicle (100), and
- the predicted future change in the measure of vibrations of the vehicle (100) is ascertained.

10. Method according to one of the preceding claims, wherein the haptic driver information is supposed to be output in an upcoming time interval; and the ascertaining of one or more vibration parameter(s) (105) relates to at least part of the upcoming time interval.

11. Method according to one of the preceding claims, wherein the amplitude, frequency or pattern of the haptic driver information is chosen such that the haptic driver information is below a disturbance threshold for the driver of the vehicle (100) at which the haptic driver information is perceived as substantially uncomfortable, wherein the disturbance threshold is chosen on the basis of the vibration parameters in the vehicle and/or on the basis of the measure of the haptic contact between the driver of the vehicle and the manual control means (102) for controlling the vehicle.

12. Computer program, configured to be executed on a processor and to thereby carry out the method according to one of the preceding claims.

13. Apparatus for performing the method according to one of the preceding claims, configured to ascertain a measure of the haptic contact between the driver of the vehicle and the control means (102) for controlling the vehicle and further configured to produce and transmit the driver information on the basis of the ascertained measure of the haptic contact between the driver of the vehicle and the control means (102) and/or the vibration parameter (105) on the control means as haptic driver information and/or as auxiliary driver information that corresponds to the driver information and is perceptible by the driver via another perception channel.

## Revendications

1. Procédé permettant de générer et de transmettre une information destinée au conducteur, dans lequel au moins une partie de l'information destinée au conducteur est générée sous la forme d'une information haptique destinée au conducteur au niveau d'un moyen de commande (102) d'un véhicule (100), comprenant les étapes consistant à :
- déterminer une mesure d'un contact haptique entre le conducteur du véhicule et le moyen de commande (102) permettant de commander le véhicule ; et
- générer l'information destinée au conducteur en fonction de la mesure déterminée du contact haptique entre le conducteur et ledit moyen de commande (102) au niveau du moyen de commande comme une information haptique destinée au conducteur, et/ou générer une information auxiliaire destinée au conducteur correspondant à l'information destinée au conducteur et perceptible par le conducteur par le biais d'un autre mode de perception,
**caractérisé en ce qu'**au moins un paramètre de vibration (105) dans le véhicule est déterminé comme une mesure de vibrations régnant actuellement ou prochainement dans le véhicule (100), et en fonction de celui-ci
- l'amplitude et/ou la fréquence de l'information haptique destinée au conducteur est/sont adaptée(s), et/ou
- un intervalle de temps ou un instant de départ de la sortie de l'information haptique destinée au conducteur est adapté, et/ou
- la génération d'au moins une partie de l'information haptique destinée au conducteur est reportée sur d'autres parties du véhicule.

2. Procédé selon la revendication 1, dans lequel l'amplitude et/ou la fréquence et/ou la durée de l'information haptique destinée au conducteur à générer sont modifiées ou réglées en fonction de la mesure déterminée du contact haptique entre le conducteur du véhicule et le moyen de commande (102) permettant de commander le véhicule.

3. Procédé selon l'une quelconque des revendications précédentes, dans lequel la génération de l'information haptique destinée au conducteur au niveau du moyen de commande (102) du véhicule est avancée ou retardée dans le temps en fonction de la mesure déterminée du contact haptique et/ou du ou des paramètre(s) de vibration (105) déterminé(s), et/ou est divisée en au moins deux parties, et/ou est adaptée à un certain intervalle de temps ou à un événement.

4. Procédé selon l'une quelconque des revendications précédentes, dans lequel un schéma de l'information haptique destinée au conducteur est sélectionné ou adapté en fonction de la mesure déterminée d'un contact haptique entre le conducteur du véhicule et le moyen de commande permettant de commander le véhicule, et/ou du/des paramètre(s) de vibration (105) déterminé(s).

5. Procédé selon l'une quelconque des revendications précédentes, dans lequel, en fonction de la mesure déterminée d'un contact haptique entre le conducteur du véhicule et le moyen de commande permettant de commander le véhicule et/ou en fonction du/des paramètre(s) de vibration (105) déterminé(s), un report au moins partiel de l'information destinée au conducteur sous forme d'information auxiliaire destinée au conducteur est effectué sur au moins un autre mode de perception du conducteur.

6. Procédé selon l'une quelconque des revendications précédentes, dans lequel le paramètre de vibration (105) est déterminé en fonction d'irrégularités d'une zone de chaussée fréquentée par le véhicule (100) dans l'intervalle de temps actuel ou proche.

7. Procédé selon l'une quelconque des revendications précédentes, dans lequel le paramètre de vibration (105) est déterminé sur la base d'au moins l'une des informations et/ou des données suivantes :
- des informations concernant la nature d'une chaussée provenant d'une carte de navigation numérique ;
- des données de capteur d'un capteur d'environnement du véhicule (100) qui est conçu pour détecter une partie de la chaussée fréquentée par le véhicule (100) ;
- des données de capteur d'un capteur dynamique vertical du véhicule (100) ;
- des données de capteur d'un capteur d'inertie et/ou d'un capteur d'accélération du véhicule (100) ;
- d'une grandeur caractéristique qui représente un paramètre d'un système d'entraînement du véhicule (100) ; et/ou
- des données de capteur d'un capteur de mouvement et/ou de force au niveau des moyens de commande manuels (102) du véhicule (100).

8. Procédé selon l'une quelconque des revendications précédentes, dans lequel
- l'information haptique destinée au conducteur comprend une ou plusieurs composantes de fréquence ayant une amplitude respective et une fréquence respective ; et
- l'amplitude et/ou la fréquence de ladite une ou des plusieurs composantes de fréquence de l'information haptique destinée au conducteur est/sont adaptée(s) en fonction de la mesure d'un contact haptique entre le conducteur du véhicule et le moyen de commande permettant de commander le véhicule et/ou en fonction du paramètre de vibration (105) déterminé.

9. Procédé selon l'une quelconque des revendications précédentes, dans lequel
- le paramètre de vibration (105) représente une mesure actuelle de vibrations dans le véhicule (100) et un changement futur prédit de la mesure de vibrations dans le véhicule (100), et
- le changement futur prédit de la mesure de vibrations du véhicule (100) est déterminé.

10. Procédé selon l'une quelconque des revendications précédentes, dans lequel l'information haptique destinée au conducteur doit être sortie dans un intervalle de temps futur ; et la détermination d'un ou de plusieurs paramètres de vibration (105) concerne au moins une partie de l'intervalle de temps futur.

11. Procédé selon l'une quelconque des revendications précédentes, dans lequel l'amplitude, la fréquence ou le schéma de l'information haptique destinée au conducteur est choisi(e) de telle sorte que l'information haptique destinée au conducteur soit inférieure à un seuil gênant pour le conducteur du véhicule (100) auquel l'information haptique destinée au conducteur est perçue comme substantiellement inconfortable, le seuil gênant étant choisi en fonction du paramètre de vibration dans le véhicule et/ou de la mesure du contact haptique entre le conducteur du véhicule et le moyen de commande manuel (102) permettant de commander le véhicule.

12. Programme informatique qui est conçu pour être exécuté sur un processeur et pour exécuter de ce fait le procédé selon l'une quelconque des revendications précédentes.

13. Dispositif d'exécution du procédé selon l'une quelconque des revendications précédentes, qui est conçu pour déterminer une mesure du contact haptique entre le conducteur du véhicule et le moyen de commande (102) permettant de commander le véhicule, et est en outre conçu pour générer et transmettre l'information destinée au conducteur en fonction de la mesure déterminée du contact haptique entre le conducteur du véhicule et le moyen de commande (102) et/ou du paramètre de vibration (105) au niveau du moyen de commande comme une information haptique destinée au conducteur et/ou comme une information auxiliaire correspondant à l'information destinée au conducteur et perceptible par le conducteur par le biais d'un autre mode de perception.
